# EUROPÄISCHE PATENTANMELDUNG

(11) **EP 2 388 507 A1**
(43) Veröffentlichungstag der Anmeldung: **23.11.2011**
(21) Anmeldenummer: 10005234.9
(22) Anmeldetag: 19.05.2010
(51) Int. Cl.: F16N 29/02, F16N 7/38, B23Q 11/10, G01F 15/18

(54) **Schmier- und/oder Kühlmittelsystem mit einstellbarem Förderstrom für eine Bearbeitungsmaschine**

(71) Anmelder: MOOG GmbH, 71034 Böblingen (DE)
(72) Erfinder: Boes, Christoph, 71154 Nufringen (DE)
(74) Vertreter: Grünecker, Kinkeldey, Stockmair & Schwanhäusser

(57) **Zusammenfassung**

In einem Schmier- und/oder Kühlmittelsystem zum Einsatz in einer Bearbeitungsmaschine mit einem Bearbeitungswerkzeug, weist das Schmier- und/oder Kühlmittelsystem eine Pumpe für ein Kühl- und/oder Schmiermittel und eine Vorrichtung zum Regeln und/oder Steuern des dem Bearbeitungswerkzeugs mittels einer Zuführleitung zugeführten Kühl- und/oder Schmiermittelstroms auf. Die Vorrichtung zum Regeln und/oder Steuern umfasst einen vom Kühl- und/oder Schmiermittelstrom durchfließbaren Volumenstromsensor, der den Kühl-und/oder Schmiermittelvolumenstrom ermittelt, und eine Auswerteeinrichtung zum Erzeugen mindestens eines Steuer- und/oder Regelsignals unter Berücksichtigung des ermittelten Kühl- und/oder Schmiermittelvolumenstroms zur Steuerung und/oder Regelung der Pumpenverstellung und/oder Pumpendrehzahl. Weiter umfasst die Bearbeitungsmaschine eine Umschalteinrichtung, mittels derer der Volumenstromsensor mit der Pumpe wahlweise in Fluidverbindung bringbar oder von dieser entkoppelbar ist.

## Beschreibung

Die Erfindung betrifft ein Schmier- und/oder Kühlmittelsystem zum Einsatz in einer Bearbeitungsmaschine mit einem Bearbeitungswerkzeug, wobei das Schmier- und/oder Kühlmittelsystem eine Pumpe für ein Kühl- und/oder Schmiermittel und eine Vorrichtung zum Regeln und/oder Steuern des dem Bearbeitungswerkzeugs mittels einer Zuführleitung zugeführten Kühl- und/oder Schmiermittelstroms aufweist. Die Vorrichtung zum Regeln und/oder Steuern umfasst einen vom Kühl- und/oder Schmiermittelstrom durchfließbaren Volumenstromsensor, der den Kühl- und/oder Schmiermittelvolumenstrom ermittelt und eine Auswerteeinrichtung zum Erzeugen mindestens eines Steuer- und/oder Regelsignals unter Berücksichtigung des ermittelten Kühl- und/oder Schmiermittelvolumenstroms zur Steuerung und/oder Regelung der Pumpenverstellung und/oder der Pumpendrehzahl.

Derartige Schmier- und/oder Kühlmittelsysteme werden beispielsweise in Bearbeitungsmaschinen eingesetzt. Die Bearbeitungsmaschinen können dabei beispielsweise als Werkzeugmaschinen ausgestaltet sein um Werkstücke z.B. spanend zu bearbeiten. Die bei der Bearbeitung des Werkstücks notwendige Kühlung sowie Schmierung des Werkzeugs wird mittels des Kühl- und/oder Schmiermittelsystemsgewährleistet, welches für einen Kühl-und/oder Schmiermittelstrom sorgt der von einer Pumpe aufrechterhalten wird. Die bei der Bearbeitung entstehende Hitze wird mittels des Fluidstroms abgeführt und die auftretende Reibung durch die Schmierwirkung verringert. Dies beugt dem Verschleiß des Werkzeugs vor und verhindert durch die bereitgestellte Kühlwirkung Schäden an Werkzeug und Werkstück.

Als einfachste Variante zum Zuführen eines Kühl- und/oder Schmiermittelstroms zum Werkzeug ist es bekannt, bei in Betrieb befindlichem Werkzeug einen voreingestellten Volumenstrom zuzuführen. Hierbei ist das Kühl- und/oder Schmiermittelsystem derart ausgeführt, dass kontinuierlich ein derart großzügig bemessener Kühl- und/oder Schmiermittelvolumenstrom zugeführt wird, dass aufgrund von Erfahrungswerten eine Überhitzung von Werkzeug und/oder Werkstück ausgeschlossen werden kann sowie eine ausreichende Schmierwirkung sichergestellt ist. Aufgrund dieser Anordnung ist jedoch ein ausreichend bemessener Vorrat an Kühl- und/oder Schmiermittel notwendig. Zudem fällt hierbei laufend eine nicht unerhebliche Menge an Kühl- und/oder Schmiermittel an, die ständig von Bearbeitungsrückständen, wie z.B. Spänen und Partikeln, befreit werden muss. Da sich die Kühl- und/oder Schmiereigenschaften der eingesetzten Flüssigkeit über die Nutzungsdauer verändern bzw. verschlechtern, ist es notwendig, diese zu überwachen und nach einer gewissen Zeit auszutauschen. Dies führt zu hohen Kosten.

Bei Kühl- und/oder Schmiermittelsystemen mit Zuführung eines konstanten Volumenstroms ist es auch bekannt einen Volumenstromsensor in die Zuführleitung zu integrieren. Diese Anordnung kann dazu genutzt werden um Schäden oder Unregelmäßigkeiten im Betriebsablauf automatisch zu erkennen. Beispielsweise kann auf diese Weise bei Werkzeugen, die das Kühl- und/oder Schmiermittel direkt durch das Werkzeug zuführen, die Verringerung des Staudrucks bei eigentlich gleichbleibender Pumpenfördermenge auf einen Werkzeugbruch hinweisen. Umgekehrt kann eine Erhöhung des Staudrucks bei gleichbleibender Pumpenfödermenge auf eine Verstopfung des Kühl-/Schmiermittelkanals im Werkzeug hindeuten. Allerdings ist das Kühl- und/oder Schmiermittel trotz der Filterung weiterhin mit z.B. abrasiven Partikeln belastet, was am Volumenstromsensor, der dem Kühl- und/oder Schmiermittelstrom ständig ausgesetzt ist, zu Beschädigungen führt.

Es ist auch bekannt, abhängig von der jeweiligen Bearbeitung des Werkstücks lediglich die hierzu notwendige Kühl- und/oder Schmiermittelmenge zuzuführen. Die Bestimmung der Steuer- und/oder Regelungssignale auf Grund von festen Kennwerten (z.B. Förderleistung der Pumpe über den Drehzahlverlauf) ist hierfür nicht geeignet, da der geförderte Volumenstrom je nach Pumpenausführung sehr stark z.B. von der Drehzahl der Pumpe, dem Ausgangsdruck und/oder der Viskosität (wiederum abhängig von der Temperatur) des Fördermediums abhängt. Derartige Kühl- und/oder Schmiermittelsysteme weisen deshalb in der Zuführleitung des Kühl- und/oder Schmiermittels einen Volumenstromsensor auf, der laufend den von der Pumpe bereitgestellten Kühl- und/oder Schmiermittelvolumenstrom, welcher dem Bearbeitungswerkzeug zugeführt wird, misst. Der Wert des kontinuierlich gemessenen Volumenstroms wird an eine Auswerteeinrichtung weitergeleitet, die aufgrund dieser Daten die Pumpenleistung laufend überwacht bzw. anpasst. Bei Konstantpumpen (z.B. Kolben- oder Zahnradpumpen) kann der geförderte Volumenstrom über die Drehzahl und/oder bei verstellbaren Pumpen über die Verstellung beeinflusst werden. Nachteilig ist hieran, dass der Volumenstromsensor dauerhaft dem Kühl- und/oder Schmiermittelstrom ausgesetzt ist, was langfristig zu dessen Beschädigung führt. Trotz der Filterung des Kühl-und/oder Schmiermittels ist dieses weiterhin mit z.B. abrasiven Partikeln belastet, was am Volumenstromsensor, der dem Kühl- und/oder Schmiermittelstrom ständig ausgesetzt ist, zu Beschädigungen führt. Es ist deshalb notwendig, dessen Funktion laufend zu überwachen und diesen gegebenenfalls auszutauschen. Zudem führen Volumenstromsensoren im Förderstrom zu einem erhöhten Strömungswiderstand. Beim Einsatz von Kühlmittel in Bearbeitungsmaschinen ist dies besonders problematisch. Zusätzlicher Widerstand in der Leitung führt zu Energieverlust und zum Aufheizen des Mediums.

Es ist deshalb Aufgabe der Erfindung, ein Kühl- und/oder Schmiermittelsystem bereitzustellen, das die Nachteile des Standes der Technik vermeidet und insbesondere eine dauerhaft zuverlässige Kühl- und/oder Schmiermittelversorgung des Bearbeitungswerkzeugs sowie der Funktion des Kühl- und/oder Schmiermittelvolumensensors sicherstellt.

Hierzu ist erfindungsgemäß vorgesehen, ein Kühl- und/oder Schmiermittelsystem zum Einsatz in einer Bearbeitungsmaschine mit einem Bearbeitungswerkzeug bereitzustellen, wobei das Schmier- und/oder Kühlmittelsystem eine Pumpe für ein Kühl- und/oder Schmiermittel und eine Vorrichtung zum Regeln und/oder Steuern des dem Bearbeitungswerkzeugs mittels einer Zuführleitung zugeführten Kühl- und/oder Schmiermittelvolumenstroms aufweist, und die Vorrichtung zum Regeln und/oder Steuern, einen vom Kühl- und/oder Schmiermittelstrom durchfließbaren Volumenstromsensor, der den Kühl- und/oder Schmiermittelvolumenstrom ermittelt und eine Auswerteeinrichtung zum Erzeugen mindestens eines Steuer-und/oder Regelsignals unter Berücksichtigung des ermittelten Kühl- und/oder Schmiermittelvolumenstroms zur Steuerung und/oder Regelung der Pumpenverstellung und/oder Pumpendrehzahl umfasst, wobei die Bearbeitungsmaschine weiter eine Umschalteinrichtung aufweist, mittels derer der Volumenstromsensor mit der Pumpe wahlweise in Fluidverbindung bringbar oder von dieser entkoppelbar ist. Mittels des Volumenstromsensors kann der dem Bearbeitungswerkzeug laufend zugeführte Kühl- und/oder Schmiermittelvolumenstrom ermittelt werden. Der dabei gemessene Kühl- und/oder Schmiermittelvolumenstrom wird an eine Auswerteeinrichtung weitergeleitet, welche aufgrund dieser Daten mindestens ein Steuer- und/oder Regelsignal erzeugt, welches die Funktion der Pumpe steuert bzw. regelt. Um einen Verschleiß des Volumenstromsensors zu vermeiden bzw. zu verringern, wird eine Umschalteinrichtung genutzt, aufgrund derer die Möglichkeit besteht, den Volumenstromsensor mit Kühl- und/oder Schmiermittel durchfließen zu lassen bzw. den Durchfluss zu stoppen. Der Volumenstromsensor kann deshalb wahlweise dem Kühl- und/oder Schmiermittelvolumenstrom ausgesetzt sein, d.h. mit der Pumpe in Fluidverbindung stehen, oder vom Kühl- und/oder Schmiermittelvolumenstrom getrennt sein, d.h. von der Fluidverbindung entkoppelt sein. Üblicherweise dient das eingesetzte Fluid sowohl der Kühlung als auch der Schmierung von Werkzeug und Werkstück. Das erfindungsgemäße Kühl- und/oder Schmiermittelsystem kann jedoch auch in Einsatzgebieten angewandt werden in denen lediglich eine Schmierung oder Kühlung notwendig ist.

Zudem kann vorgesehen sein, dass mindestens ein weiterer Sensor zum Ermitteln mindestens eines Betriebsparameters eingesetzt ist und der Sensor ein Temperatursensor und/oder ein Pumpendrehzahlsensor und/oder ein Pumpendrucksensor ist. Die Auswerteeinrichtung kann mit dem vom Volumenstromsensor ermittelten Volumenstrom sowie den von dem mindestens einen anderen Sensor ermittelten Betriebsparameter die für den jeweiligen Betriebszustand notwendige Größe des Steuer- und /oder Regelsignals ermitteln. Als mögliche Betriebsparameter kommen die Kühl- und/oder Schmiermitteltemperatur, die Pumpendrehzahl, die Pumpenverstellung, der Pumpendruck, d.h. der von der Pumpe im Kühl- und/oder Schmiermittel aufgebrachte Druck, sowie weitere Parameter in Betracht, die einen Einfluss auf die Arbeit der Bearbeitungsmaschine haben können. Dies ist vorteilhaft, da beispielsweise, abhängig von der jeweiligen Bearbeitungsdauer, die Temperatur des Kühl- und/oder Schmiermittelvorrats ansteigt und sich damit auch die Viskosität des Kühl-und/oder Schmiermittels verändert. Um eine gleichbleibende Kühl- und/oder Schmierwirkung zu erreichen, ist es deshalb notwendig, das zugeführte Kühl- und/oder Schmiermittelvolumen konstant zu halten und Pumpendrehzahl und/oder Pumpenverstellung abhängig von Fluidtemperatur und Fluiddruck nachzustellen, bzw. anzupassen..

Eine Weiterbildung der erfindungsgemäßen Lösung kann darin bestehen dass der Volumenstromsensor mittels einer Kombination aus mindestens einer Messblende und einer zugehörigen Druckmesseinrichtung gebildet ist. Hierzu wird die mindestens eine Messblende dem Kühl- und/oder Schmiermittelstrom ausgesetzt. Die Blende bewirkt eine Querschnittsverengung, so dass sich an dieser Stelle die Flussgeschwindigkeit des Kühl-und/oder Schmiermittels erhöht. Die Zunahme der Geschwindigkeit an der Einschnürungsstelle führt zu einer Änderung des Druckes. Die so entstehende Druckdifferenz ist ein Maß für den Durchfluss, d.h. für den durch die Blende fließenden Volumenstrom. Mittels der Differenzdruckmessung lässt sich also der Volumenstrom durch die Messblende ermitteln. Die Druckmesseinrichtung kann mindestens ein im Bereich der Messblende angeordneter Drucksensor sein. Ebenso ist denkbar mehrere Drucksensoren einzusetzen, die derart voneinander beabstandet platziert sind, dass eine Berechnung des Differenzdrucks und damit die Bestimmung des Volumenstroms ermöglicht ist. Beim Einsatz einer Druckmesseinrichtung mit mindestens zwei Drucksensoren ist einer der Drucksensoren vor der Messblende und einer der Drucksensoren hinter der Messblende positioniert. Als Drucksensor vor der Messblende kann beispielsweise auch der Pumpendrucksensor genutzt werden. Besteht nach der Blende konstanter Druck, z.B. Umgebungsdruck, so ist ein Drucksensor ausreichend. Die mindestens eine Messblende kann auch verstellbar ausgeführt sein, z.B. als Proportionalwegeventil.

Als Weiterbildung des Kühl- und/oder Schmiermittelsystems kann vorgesehen sein, dass die Auswerteeinrichtung derart konfiguriert ist, dass der Kühl- und/oder Schmiermittelvolumenstrom Einfluss auf eine Kennfeldsteuerung bzw. -regelung nimmt. Als Kennfeldsteuerung bzw. -regelung ist eine Steuerung bzw. Regelung unter Zuhilfenahme eines Kennfelds zu verstehen. Ein Kennfeld oder auch Kennlinienfeld genannt, stellt mehrere Kennlinien in Abhängigkeit von anderen Parametern dar, wobei eine Kennlinie eine grafische Darstellung von zwei voneinander abhängigen physikalischen Größen ist. Eine Kennlinie kann demnach in einem zweidimensionalen Koordinatensystem eingezeichnet werden, wobei jeder der beiden physikalischen Größen jeweils eine Koordinatenachse zugeordnet ist. Ein Kennlinienfeld ergibt sich, wenn das zweidimensionale Koordinatensystem der Kennlinie um eine weitere Koordinatenachse erweitert wird und eine Vielzahl von Kennlinien eingetragen werden, so dass sich eine dreidimensionale Fläche ergibt. Die Kennlinien können von einem weiteren bzw. mehreren Parametern abhängig sein, wobei in diesen Fällen jedoch keine grafische Darstellung möglich ist. Charakteristisch ist jedoch, dass aufgrund von Kennlinien bzw. Kennlinienfeldern bei bekannten Parametern der bzw. die verbleibenden unbekannten Parameter aus der Kennlinie bzw. dem Kennlinienfeld ermittelt bzw. zumindest der jeweilige Wertebereich angegeben werden kann. Derartige Kennlinien bzw. Kennlinienfelder können jeweils von Auswerteeinrichtungen selbsttätig erstellt oder beim Hersteller der Maschine z.B. in einen lesbaren Speicher abgelegt werden. Die Kennlinie bzw. das Kennlinienfeld kann auch mittels mathematischer Formeln nachgebildet werden. Derartige Kennfeldsteuerungen bzw. -regelungen bieten den Vorteil einer dynamischeren Regelung als bei konventionellen Steuerungen und/oder Regelungen. Bevorzugt ergibt sich die Kennlinie bzw. das Kennlinienfeld für den Kühl- und/oder Schmiermittelvolumenstrom Q als Funktion mindestens der Parameter Pumpen- oder Motordrehzahl n, Pumpendruck p, Pumpeneinstellung d (bei Nutzung einer verstellbaren Pumpe) und der Kühl- und/oder Schmiermitteltemperatur T.

Ferner kann vorgesehen sein, dass das Kühl- und/oder Schmiermittelsystem eine Messleitung aufweist, welche mit der Zuführleitung verbunden und von Kühl- und/oder Schmiermittel durchfließbar ist und der Volumenstromsensor in der Messleitung positioniert ist. Die von der Pumpe ausgehende Zuführleitung weist demnach eine Abzweigung zu einer Messleitung auf, welche in Fluidverbindung mit der Pumpe steht. In der Messleitung, d.h. getrennt von der Zuführleitung ist der Volumenstromsensor angebracht, wobei der Volumenstromsensor dem Kühl- und/oder Schmiermittelstrom ausgesetzt ist. Dies hat den Vorteil, dass der Kühl- und/oder Schmiermittelvolumenstromsensor nicht vom Hauptvolumenstrom, welcher zum Bearbeitungswerkzeug geleitet wird, durchströmt wird. Dies verringert die Abnutzung bzw. den Verschleiß des Volumenstromsensors und erhöht so dessen Lebensdauer. Der Volumenstromsensor ist derart an oder in der Messleitung angebracht, dass das Sensorelement dem Flüssigkeitsstrom ausgesetzt ist.

Als weitere Ausgestaltungsform des Kühl- und/oder Schmiermittelsystems kann vorgesehen sein, dass die Umschalteinrichtung zwei Schaltstellungen aufweist, wobei in der ersten Schaltstellung Kühl- und/oder Schmiermittel weiter in der Zuführleitung fließt und in der zweiten Schaltstellung Kühl- und/oder Schmiermittel in die Messleitung fließt. Die Umschalteinrichtung ist also derart positioniert, dass der Durchfluss in die Messleitung blockiert werden kann. Zudem sind zwei Schaltstellungen vorgesehen, wobei bei jeder der beiden Schaltstellungen jeweils die Verbindung in eine der beiden Leitungen blockiert ist. Wird das Kühl- und/oder Schmiermittel in die Zuführleitung geleitet, so ist die Messleitung geschlossen, d.h. der Kühl- und/oder Schmiermittelvolumenstrom durch den Volumenstromsensor gestoppt. Wird der Kühl- und/oder Schmiermittelstrom in die Messleitung geleitet, so wird der von der Pumpe geförderte Kühl- und/oder Schmiermittelstrom an der Abzweigung zur Messleitung vollständig in die Messleitung geführt. Die Umschalteinrichtung ist deshalb bevorzugt direkt an der Abzweigung der Messleitung von der Zuführleitung positioniert. Dies hat den Vorteil, dass der Kühl- und/oder Schmiermittelvolumenstrom in der Messleitung durch den Volumenstromsensor erfasst wird.

Es kann vorgesehen sein, dass die Umschalteinrichtung ein Wegeventil mit zwei Schaltstellungen ist und/oder proportional verstellt werden kann. Derartige Ventile sind in der Industrie weitverbreitet und haben sich bewährt. Mit Wegeventilen lassen sich auf einfache Weise unterschiedliche Schaltstellungen realisieren.

Alternativ kann vorgesehen sein, dass die Auswerteeinrichtung in der ersten Schaltstellung der Umschalteinrichtung das mindestens eine Steuer- und/oder Regelsignal unter Einbeziehung des in der zweiten Schaltstellung der Umschalteinrichtung ermittelten Kühl- und/oder Schmiermittelvolumenstroms erzeugt. Die Auswerteeinrichtung weist hierzu Mittel auf, um den in der zweiten Schaltstellung der Umschalteinrichtung ermittelten Kühl- und/oder Schmiermittelvolumenstrom zu speichern bzw. in einem Kennfeld zu hinterlegen. Wird die Umschalteinrichtung dann in die erste Schaltstellung gebracht, so ist die Messleitung mit dem Volumenstromsensor von dem Kühl- und/oder Schmiermittelvolumenstrom abgeschnitten, weshalb kein Volumenstrom gemessen werden kann. In diesem Fall wird der in der zweiten Schaltstellung ermittelte Kühl- und/oder Schmiermittelvolumenstrom, welcher in der Auswerteeinrichtung hinterlegt ist, genutzt, um ein Steuer- und/oder Regelsignal zu erzeugen. Dies hat den Vorteil, dass der Volumenstromsensor nicht dauerhaft dem Kühl-und/oder Schmiermittelstrom ausgesetzt ist und dessen zuvor ermittelte Daten dennoch genutzt werden können, um den Kühl- und/oder Schmiermittelvolumenstrom zu steuern bzw. zu regeln. Insbesondere ist dies auch deshalb vorteilhaft, da die Kühl- und/oder Schmiermittelvolumenstromkennfelder in der Regel nur sehr geringe Abweichungen bzw. Änderungen während der Laufzeit der Bearbeitungsmaschine erfahren. Es ist deshalb in der Regel ausreichend, den von der Pumpe geförderten Kühl- und/oder Schmiermittelvolumenstrom beispielsweise bei der täglichen Inbetriebnahme der Bearbeitungsmaschine zu ermitteln und die Bearbeitungsmaschine beispielsweise mehrere Bearbeitungszyklen ohne weitere Messung des Kühl- und/oder Schmiermittelvolumenstroms arbeiten zu lassen, bevor eine erneute Volumenstrommessung bzw. Volumenstromkennfeldmessung erfolgt.

Besonders vorteilhaft ist es, wenn die Umschalteinrichtung zumindest vorübergehend während einer Inbetriebnahmephase der Bearbeitungsmaschine in der zweiten Schaltstellung steht. Auf diese Weise kann bei der Inbetriebnahme bzw. in einem gewissen Zeitraum nach Inbetriebnahme der Bearbeitungsmaschine die Ermittlung des von der Pumpe geförderten Kühl- und/oder Schmiermittelvolumenstroms erfolgen. Nachdem der Kühl- und/oder Schmiermittelvolumenstrom ermittelt wurde, kann die Umschalteinrichtung in die erste Schaltstellung gebracht werden, um das Bearbeitungswerkzeug mit Kühl- und/oder Schmiermittel zu versorgen. Dies hat den Vorteil, dass zumindest während der Inbetriebnahmephase das von der Pumpe gelieferte Kühl- und/oder Schmiermittelvolumen pro Zeiteinheit ermittelt wird und damit die Auswerteeinrichtung ein Steuer- und/oder Regelsignal erzeugen kann. Sobald der Kühl- und/oder Schmiermittelvolumenstrom ermittelt ist, kann in die erste Schaltstellung gewechselt werden, da die Auswerteeinrichtung nun mit diesem ermittelten Kühl- und/oder Schmiermittelvolumenstrom die Steuerung und/oder Regelung der Pumpe vornehmen kann.

Es kann vorgesehen sein, dass die Messleitung in einen Kühl- und/oder Schmiermitteltank mündet. Auf diese Weise wird ein einfacher Aufbau der Bearbeitungsmaschine realisiert.

Weiter kann vorgesehen sein, dass die Messleitung stromabwärts des Volumenstromsensors in die Zuführleitung mündet. Nachdem also das Kühl- und/oder Schmiermittel den Volumenstromsensor durchflossen hat, wird dieses wieder der Zuführleitung zugeführt. Das Kühl- oder Schmiermittel gelangt damit zum Bearbeitungswerkzeug. Damit wird sichergestellt, dass das von der Pumpe geförderte Kühl- und/oder Schmiermittel tatsächlich zum Bearbeitungswerkzeug gelangt. Zudem kann der Kühl- und/oder Schmiermittelvolumenstrom auch während des Einsatzes des Bearbeitungswerkzeuges ermittelt werden, da die Zufuhr von Kühl- und/oder Schmiermittel an das Bearbeitungswerkzeug nicht unterbrochen wird.

Die erfindungsgemäße Lösung der Aufgabe umfasst weiter eine Regelungs- und/oder Steuerungseinrichtung zum Regeln und/oder Steuern des Kühl- und/oder Schmiermittelstroms der einem Bearbeitungswerkzeug einer Bearbeitungsmaschine mittels einer Pumpe zugeführt ist, mit einer Auswerteeinrichtung zum Erzeugen mindestens eines Steuer- und/oder Regelsignals unter Berücksichtigung eines ermittelten Kühl- und/oder Schmiermittelvolumenstroms, wobei die Auswerteeinrichtung derart ausgestaltet ist, dass diese zum Erzeugen des Steuer- und/oder Regelsignals für die Pumpenverstellung und/oder der Pumpendrehzahl das Steuer- und/oder Regelsignal basierend auf dem zuvor während mindestens einer ausgewählten Zeitspanne zu Kalibrierzwecken ermittelten Kühl- und/oder Schmiermittelvolumenstrom mittels eines hinterlegten Kennfelds berechnet. Der Wert des gemessenen Kühl- und/oder Schmiermittelvolumenstrom wird an die Auswerteeinrichtung übertragen und von dieser empfangen. Der gemessene Wert des Kühl- und/oder Schmiermittelvolumenstroms kann laufend während einer Messung des Volumenstroms an die Auswerteeinrichtung übertragen werden. Alternativ kann der Wert auch nach Abschluss der Messung einmalig, d.h. als einmalige Übertragung nach Ende eines Messzyklus übertragen werden. Die Übertragung kann zeitversetzt zur Messung des Volumenstroms erfolgen. Mittels des empfangenen Werts des Kühl- und/oder Schmiermittelvolumenstroms wird das Kennfeld kalibriert. Als Kalibrierung kann sowohl die Anpassung eines bereits in einem Speichermedium hinterlegten Kennfelds an den gemessenen Kühl- und/oder Schmiermittelvolumenstrom bezeichnet werden als auch die Neuerstellung eines Kennfelds basierend auf dem gemessenen Kühl- und/oder Schmiermittelvolumenstrom, ggf. unter Einbeziehung weiterer gemessener Kennwerte (wie z.B. Pumpendruck, Pumpendrehzahl, Kühl- und/oder Schmiermitteltemperatur usw.). Die Auswerteeinrichtung nutzt während Betriebszeiten, in denen der Kühl-und/oder Schmiermittelvolumenstrom nicht ermittelt bzw. übertragen wird das Kennfeld, welches unter Einbeziehung des Kühl- und/oder Schmiermittelvolumenstroms kalibriert wurde, um die Zufuhr von Kühl- und/oder Schmiermittel zu regeln und/oder zu steuern.

Alternativ kann die Regelungs- und/oder Steuerungseinrichtung derart gestaltet sein, dass diese in einer Regelungs- und/oder Steuerungseinheit einer Pumpe, eines Pumpenmotors oder einer Bearbeitungsmaschine integriert ist.

Zudem umfasst die erfindungsgemäße Lösung der Aufgabe eine Bearbeitungsmaschine mit einem Schmier- und/oder Kühlmittelsystem und/oder einer Regelungs- und/oder Steuerungseinrichtung der zuvor beschriebenen Art.

Die Erfindung umfasst weiter ein Verfahren zum Regeln und/oder Steuern des Kühl-und/oder Schmiermittelstroms der einem Bearbeitungswerkzeug einer Bearbeitungsmaschine mittels einer Pumpe zugeführt ist, mit den folgenden Schritten:
Ermitteln eines von der Pumpe erzeugten Kühl- und/oder Schmiermittelvolumenstroms,

Erzeugen mindestens eines Steuer- und/oder Regelsignals mittels einer Auswerteeinrichtung unter Berücksichtigung des ermittelten Kühl- und/oder Schmiermittelvolumenstroms zur Steuerung und/oder Regelung der Pumpenverstellung und/oder der Pumpendrehzahl, wobei der Kühl- und/oder Schmiermittelvolumenstrom nur während ausgewählter Zeitspannen zu Kalibrierzwecken ermittelt wird und hauptsächlich während der üblichen Betriebszeiten der Kühl- und/oder Schmiermittelvolumenstrom nicht ermittelt wird, wobei die Auswerteeinrichtung das Steuer- und/oder Regelsignal basierend auf den zuvor ermittelten Kühl- und/oder Schmiermittelvolumenstrom mittels hinterlegter und/oder ermittelter Daten zur Steuerung und/oder Regelung der Pumpenverstellung und/oder Pumpendrehzahl berechnet.

Vorteilhaft ist hierbei, dass der Kühl- und/oder Schmiermittelvolumenstrom nicht dauerhaft, d.h. nicht durchgehend während der Betriebszeiten der Bearbeitungsmaschine ermittelt werden braucht. Der Kühl- und/oder Schmiermittelvolumenstrom wird nur kurzzeitig, d.h. vorübergehend oder während einer kurzen Zeitdauer ermittelt, wohingegen in den restlichen Betriebszeiten keine Ermittlung des Kühl- und/oder Schmiermittelvolumenstroms erfolgt. In diesen Zeiten, d.h. in denen kein Kühl- und/oder Schmiermittelvolumenstrom ermittelt wird, erfolgt die Erzeugung des mindestens eines Steuer- und/oder Regelsignals mittels der Auswerteeinrichtung unter Zuhilfenahme der ermittelten Kühl- und/oder Schmiermittelvolumenstromkennfelder.

Im Folgenden werden die Ausführungsformen anhand der Zeichnungen näher beschrieben. Es zeigen:
Fig. 1 eine schematisierte Darstellung der Leitungsanordnung eines erfindungsgemäßen Kühl- und/oder Schmiermittelsystems in einer ersten Ausführungsform,
Fig. 2 eine schematisierte Darstellung einer Leitungsanordnung eines Kühl- und/oder Schmiermittelsystems einer zweiten Ausführungsform und

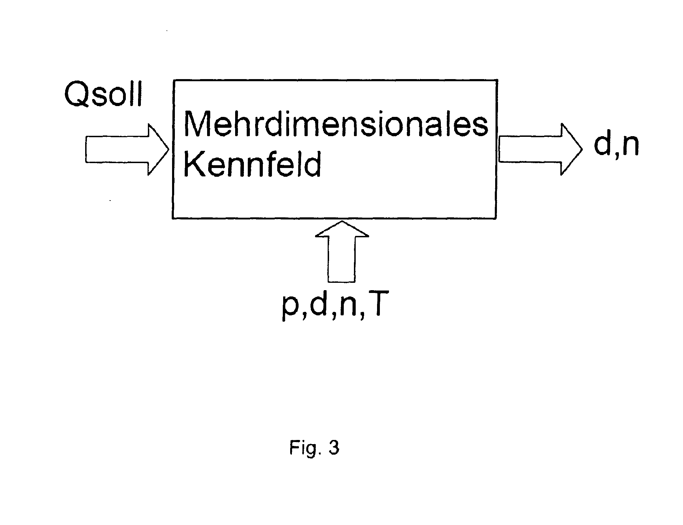

Fig. 3 eine schematisierte Darstellung der Eingangs- und Ausgangsgrößen bei der Ermittlung der Steuer- bzw. Regelsignale für eine Pumpe.

Ein erfindungsgemäßes Kühl- und/oder Schmiermittelsystem umfasst eine Pumpe 1, welche von einem Motor 2 angetrieben wird. Die Pumpe 1 fördert Kühl- und/oder Schmiermittel über eine Pumpenleitung 3 aus einem Vorratstank, d.h. einem Kühl- und/oder Schmiermitteltank 11. Das von der Pumpe unter Druck gesetzte Kühl- und/oder Schmiermittel wird in eine Zuführleitung 4 gespeist, über die es zu einem Bearbeitungswerkzeug gefördert wird. In der Zuführleitung 4 ist eine Abzweigung 5 vorgesehen, wo eine Messleitung 6 mit der Zuführleitung 4 verbunden ist. Die Zuführleitung 4 wird mittels der Abzweigung 5 in zwei Abschnitte geteilt. Ein erster Zuführleitungsabschnitt 4.1 verläuft zwischen der Pumpe 1 und der Abzweigung 5. Ein zweiter Zuführleitungsabschnitt 4.2 verläuft von der Abzweigung 5 in Richtung des Bearbeitungswerkzeugs. An der Abzweigung 5 ist eine Umschalteinrichtung 7 positioniert, mittels der der Kühl- und/oder Schmiermittelfluss wahlweise weiter in die Zuführleitung 4.2 in Richtung des Bearbeitungswerkzeugs gesteuert werden kann, bzw. von der pumpenseitigen Zuführleitung 4.1 in die Messleitung 6 geleitet werden kann. Im Anschluss an die Abzweigung 5 oder im Verlauf der Messleitung 6 ist ein Volumenstromsensor 8 positioniert, welcher von Kühl- und/oder Schmiermittel durchflossen ist, wenn die Umschalteinrichtung 7 das Kühl- und/oder Schmiermittel in die Messleitung 6 leitet. Die Messleitung 6 mündet stromabwärts des Volumenstromsensors in den Vorratstank 11. Ein Pumpendrucksensor 9 ist zwischen der Pumpe und der Abzweigung 5 sowie der Umschalteinrichtung 7 positioniert und misst einen von der Pumpe 1 auf das Kühl- und/oder Schmiermittel aufgebrachten Druck p. Der Pumpendrucksensor steht hierzu mit der Zuführleitung 4.1 in Verbindung.

Die Bearbeitungsmaschine, in der das erfindungsgemäße Kühl- und/oder Schmiermittelsystem eingesetzt ist, kann eine Werkzeugmaschine sein, sowie jede andere Art von Maschine, die zur Bearbeitung von Werkstücken genutzt wird und hierbei die Zufuhr von Kühl-und/oder Schmiermittel zum Werkzeug bzw. Werkstück benötigt. Grundsätzlich kann die Bearbeitungsmaschine deshalb eine umformende, trennende, spanende oder abtragende Bearbeitungsmaschine sein, sofern bei deren Betrieb die Zufuhr von Kühl- und/oder Schmiermittel zum Bearbeitungswerkzeug oder Werkstück vorgesehen ist. Als Bearbeitungswerkzeug kommt jedes Werkzeug in Betracht, das bei den zuvor genannten Werkzeugmaschinen eingesetzt wird. Beispielsweise können dies also Bohrer, Fräsen, Hobel, Sägen, Feilen, Schleif- oder Honelemente, aber auch nicht spanabhende Werkzeuge sein.

Der Vorratstank 11 enthält einen Vorrat an Kühl- und/oder Schmierflüssigkeit. Die Kühl-und/oder Schmierflüssigkeit hat die Aufgabe, bei der Bearbeitung des Werkstücks mittels des Bearbeitungswerkzeugs die entstehende Wärme aufzunehmen und abzuleiten, sowie entstehende Späne oder Partikel aus dem Bearbeitungsbereich wegzuspülen. Ferner dient es dazu, das Bearbeitungswerkzeug zu schmieren, d.h. die Reibung zwischen Bearbeitungswerkzeug und Werkstück zu verringern. Sowohl durch die Wärmeableitung als auch durch die Schmierfunktion wird die Lebensdauer des Werkzeugs erhöht und es wird erhöhtem Verschleiß vorgebeugt. Aus dem Vorratstank 11 wird mittels der Pumpenleitung 3 Kühl-und/oder Schmiermittel abgesaugt, bzw. zur Pumpe 1 geleitet. Die Pumpe 1 kann eine verstellbare Flüssigkeitspumpe sein, die abhängig von der Einstellung d einen gewissen Volumenstrom (d.h., Fluidvolumen pro Zeiteinheit) bzw. Druck liefert. Weiterhin kann die Förderleistung der Pumpe bzw. der aufgebaute Druck durch die Drehzahl n des Motors 2 beeinflusst werden. Das auf diese Weise unter Druck gesetzte Kühl- und/oder Schmiermittel fließt durch die Zuführleitung 4.1 in Richtung der Abzweigung 5 und passiert dabei einen Pumpendrucksensor 9, der den Druck p des Kühl- und/oder Schmiermittels misst. Der Pumpendrucksensor 9 kann auch an jeder anderen beliebigen Stelle des Leitungsaufbaus der Bearbeitungsmaschine positioniert werden.

Das Kühl- und/oder Schmiermittel erreicht die Umschalteinrichtung 7, welche im gezeigten Ausführungsbeispiel als 3/2-Wegeventil ausgebildet ist. Dies bedeutet, das Wegeventil hat drei Anschlüsse, sowie zwei Schaltstellungen. Das Wegeventil kann fernbetätigbar z.B. über einen Elektromagneten ausgestaltet sein. Bevorzugt kehrt es nach Betätigung automatisch in seine Ursprungsposition zurück. Die Ursprungsposition ist dabei bevorzugt die Stellung, in der Kühl- und/oder Schmiermittel von der Pumpe Richtung Bearbeitungswerkzeug geleitet wird. Alternativ kann die Umschalteinrichtung 7 auch als handbetätigbares Ventil ausgestattet sein. Die Umschalteinrichtung 7 hat demnach zwei Schaltstellungen. In der ersten Schaltstellung wird Kühl- und/oder Schmiermittel von der Pumpe 1 über die Zuführleitung 4.1 in die Umschalteinrichtung 7 weiter in der Zuführleitung 4.2 zum Bearbeitungswerkzeug geleitet. In der zweiten Schaltstellung wird Kühl- und/oder Schmiermittel von der Pumpe 1 über die Zuführleitung 4.1 in die Umschalteinrichtung 7 in die Messleitung 6 durch den Volumenstromsensor 8 geleitet.

Bevorzugt ist in der ersten Schaltstellung der Umschalteinrichtung 7 lediglich die Verbindung zur Zuführleitung 4.2 in Richtung des Bearbeitungswerkzeugs geöffnet und die Fluidverbindung zur Messleitung 6 vollständig unterbrochen. Entsprechend ist bevorzugt vorgesehen, dass in der zweiten Schaltstellung lediglich eine Fluidverbindung von der Pumpe 1 über die Zuführleitung 4.1 die Umschalteinrichtung 7 in die Messleitung 6 geöffnet ist, wohingegen die Verbindung stromabwärts der Umschalteinrichtung 7 in die Zuführleitung 4.2 gesperrt ist. Auf diese Weise wird sichergestellt, dass der vollständige Volumenstrom durch den Volumenstromsensor 8 fließt und von diesem gemessen werden kann. Alternativ kann vorgesehen sein, dass lediglich ein Teilvolumenstrom der Zuführleitung 4.1 an der Abzweigung 5 aus der Zuführleitung 4.1 entnommen wird und in der Messleitung 6 mittels des Volumenstromsensors 8 gemessen wird. Unter Zuhilfenahme einer z.B. elektronischen Berechnungseinheit kann dann aufgrund der gemessenen Volumenstromwerte ein Gesamtvolumenstrom, der von der Pumpe 1 erzeugt wird, errechnet werden.

Mittels der gewählten Anordnung, der von der Zuführleitung getrennten Positionierung des Volumenstromsensors, besteht auch die Möglichkeit einen Volumenstromsensor zur Steuerung und/oder Regelung mehrerer Bearbeitungsmaschinen oder Kühl- und/oder Schmiermittelpumpen zu nutzen.

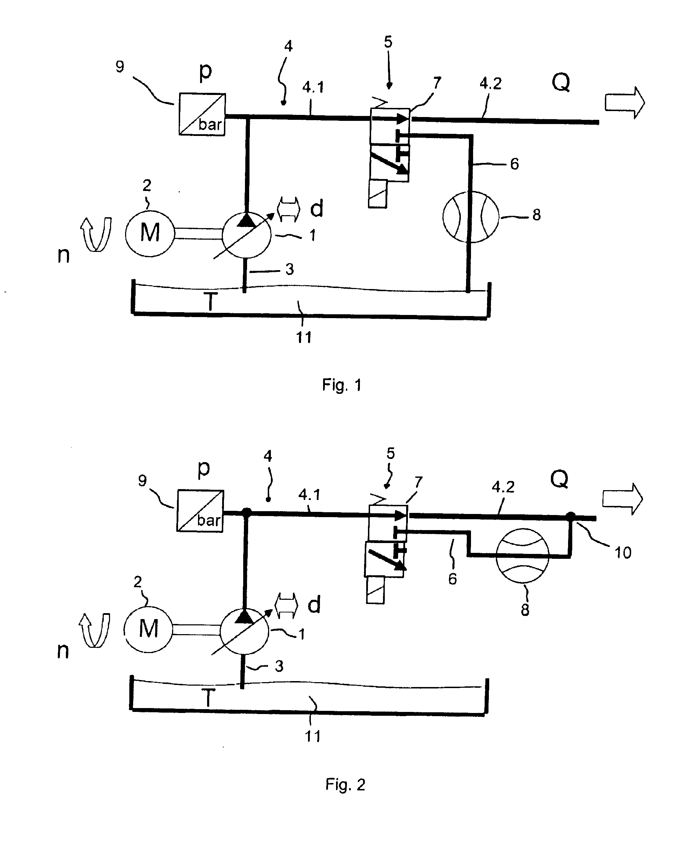

Im Folgenden wird anhand der Fig. 2 eine weitere Ausführungsform eines erfindungsgemäßen Kühl- und/oder Schmiermittelsystems erläutert. Es soll im Folgenden nur auf die wesentlichen Unterschiede zum vorangegangenen Ausführungsbeispiel eingegangen werden. Deshalb werden für gleiche und wirkungsgleiche Bauelemente gleiche Bezugsziffern verwendet und entsprechend auf die vorangegangene Beschreibung verwiesen.

Die in Fig. 2 gezeigte Leitungsanordnung für ein erfindungsgemäßes Kühl- und/oder Schmiermittelsystem unterscheidet sich von der zuvor erläuterten Anordnung in der Position der Messleitung und des Volumenstromsensors. Die Messleitung 6 ist mittels der Abzweigung 5 mit der Zuführleitung 4.1 verbunden. An der Abzweigung 5 ist eine Umschalteinrichtung 7 positioniert, die wahlweise Kühl- und/oder Schmiermittel in die Zuführleitung 4.2 in Richtung des Bearbeitungswerkzeugs leiten kann sowie in die Messleitung 6 in Richtung des Volumenstromsensors 8 leiten kann. Im gezeigten Ausführungsbeispiel jedoch wird das Kühl- und/oder Schmiermittel, welches den Volumenstromsensor 8 passiert hat, wieder stromabwärts der Abzweigung 5 in die Zuführleitung 4.2 über eine Mündung 10 zurückgespeist, um dem Bearbeitungswerkzeug zugeleitet zu werden. Auf diese Weise kann auch während des Betriebs des Bearbeitungswerkzeugs Kühl- und/oder Schmiermittel durch den Volumenstromsensor 8 geleitet werden.

In der Ausführungsform des Kühl- und/oder Schmiermittelsystemsder Fig. 1 wäre ein Messen des Volumenstromes mittels des Volumenstromsensors 8 während eines Betriebs des Bearbeitungswerkzeugs nicht möglich bzw. sinnvoll, da dann die Kühl- und/oder Schmiermittelversorgung zum Bearbeitungswerkzeug unterbrochen wäre. Dies würde möglicherweise zu einer Zerstörung des Bearbeitungswerkzeugs und/oder des Werkstücks führen.

Allen Ausführungsformen ist gemein, dass ein oder mehrere weitere Sensoren vorgesehen sein können, um Betriebsparameter der Bearbeitungsmaschine zu ermitteln. Diese sind in den Figuren nicht gezeigt. Der Sensor kann beispielsweise ein Temperatursensor sein, der die Temperatur T des Kühl- und/oder Schmiermittels ermittelt. Weiter kann vorgesehen sein, dass ein Pumpendrehzahlsensor die Drehzahl n der Pumpe oder des Motors ermittelt. Zudem können weitere Sensoren vorgesehen werden, die relevante Daten bzw. Betriebsparameter aufnehmen. Die vom Volumenstromsensor 8 und von den gegebenenfalls vorgesehenen mindestens einem weiteren Sensor aufgenommenen Daten werden einer Auswerteeinrichtung übermittelt, die aus diesen Daten mindestens ein Steuer- und/oder Regelsignal ermittelt und dieses zur Steuerung oder Regelung der Pumpe oder des Motors nutzt. Das mindestens eine Steuer- und/oder Regelsignal kann demnach die Drehzahl n des Motors und/oder die Einstellung d der Pumpe beeinflussen. Auch ist beispielsweise denkbar, weitere Elemente wie z.B. ein in der Zuführleitung vorgesehenes Drosselventil oder ähnliche Elemente zu beeinflussen.

Die Auswerteeinrichtung kann in allen Ausführungsformen als elektronische Recheneinheit ausgestaltet sein, die beispielsweise einer Elektronikeinheit, z.B. einer Regelungs- und/oder Steuerungseinheit der Pumpe, des Pumpenmotors oder der Bearbeitungsmaschine zugeordnet oder in diese integriert ist.

Im Folgenden wird die Wirkungs- und Funktionsweise näher erläutert.

Während einer Inbetriebnahmephase der Bearbeitungsmaschine wird die Pumpe 1 mit einer vorgegebenen Drehzahl n und Einstellung d in Betrieb genommen. Die Umschalteinrichtung 7 wird in die zweite Schaltstellung gebracht, so dass Kühl- und/oder Schmiermittel durch die Messleitung 6 und den Volumenstromsensor 8 geleitet wird. Der Volumenstromsensor 8 ermittelt den von der Pumpe 1 erzeugten Volumenstrom. Die Umschalteinrichtung 7 wird in die erste Schaltstellung gebracht um das Bearbeitungswerkzeug mit Kühl- und/oder Schmiermittel zu versorgen. Der gemessene Volumenstrom wird an die Auswerteeinrichtung übermittelt, welche bestimmt wie die Einstellung der Pumpe d bzw. die Drehzahl n gewählt werden muss, um einen gewünschten Volumenstrom Q bzw. Druck p zu erreichen.

In der Auswerteeinrichtung sind Daten oder Parameter hinterlegt, die eine Ermittlung der für einen Volumenstrom notwendigen Steuer- und/oder Regelsignale ermöglichen. Diese Daten oder Parameter sind jedoch üblicherweise nur auf die Bearbeitungsmaschine im Auslieferungszustand anwendbar, da sich im Laufe der Betriebszeit z.B. die Fördercharakteristik der Pumpe wegen z.B. Abnutzung verändert. Der gemessene Volumenstrom wird deshalb genutzt um die hinterlegten Daten oder Parameter zu kalibrieren, d.h. an den jeweiligen Zustand der Bearbeitungsmaschine anzupassen. Die Ermittlung der notwendigen Steuer-und/oder Regelsignale kann alternativ beispielsweise mittels mathematischer Formeln erfolgen. Bevorzugt geschieht dies jedoch mittels eines sogenannten Kennlinienfelds. Dabei kann bereits herstellerseitig das Kennfeld der Pumpe bzw. des Kühl- und/oder Schmiermittelkreislaufs aufgezeichnet und in der Maschine hinterlegt sein, wobei dieses Kennfeld mit den gemessenen tatsächlichen Daten des Volumenstromsensors und gegebenenfalls den weiteren Sensoren kalibriert wird. Dies bedeutet, die üblicherweise unter Laborbedingungen ermittelten Kennlinien bzw. das Kennfeld wird mit den im Betrieb gemessenen Daten abgeglichen und an diese angepasst. Es besteht dann die Möglichkeit, für vorgegebene Daten (z.B. Druck p und Volumenstrom Q) die jeweils notwendige Pumpeneinstellung d und Drehzahl n zu ermitteln. Durch die Kalibrierung sind diese ermittelten Daten genauer als bei einem unkalibrierten Kennfeld. Die beispielsweise im zeitlichen Verlauf auftretenden Abnutzungserscheinungen der Pumpe können so in der Steuerung und/oder Regelung der Kühl-und/oder Schmiermittelzufuhr berücksichtigt werden.

Alternativ kann es vorgesehen sein, das Kennfeld auch während einer Inbetriebnahmephase oder in Zeitabständen während des Betriebs der Bearbeitungsmaschine aufzuzeichnen. Eine derartige Kalibrierung erfolgt bevorzugt bei Inbetriebnahme, d.h. bei einer Inbetriebnahmephase der Bearbeitungsmaschine. Weiterhin kann diese auch während Bearbeitungspausen des Bearbeitungswerkzeugs erfolgen. Im Falle der Ausführungsform der Fig. 2, d.h. wenn das Kühl- und/oder Schmiermittel nach Passieren des Volumenstromsensors 8 wieder in die Zuführleitung 4 zurückgeleitet wird, kann dies auch während des Einsatzes des Bearbeitungswerkzeugs erfolgen. Üblicherweise wird die Bestimmung des Volumenstroms zyklisch, d.h. in festgelegten Intervallen automatisch ausgelöst. Hierzu können in der Steuereinrichtung der Bearbeitungsmaschine frei definierte oder frei programmierte Intervalle oder wiederkehrende Zeitabstände definiert werden. Auch die Ermittlung des Volumenstroms nach einer vorgegebenen Anzahl von Bearbeitungszyklen, in Bearbeitungspausen oder bei Werkzeugwechsel ist möglich. Schließlich ist auch eine manuelle Auslösung der Volumenstromermittlung denkbar.

Nachdem die Kalibrierung erfolgt ist, d.h., nachdem der Volumenstrom mittels des Volumenstromsensors 8 ermittelt wurde, wird dieser Wert in der Auswerteeinheit hinterlegt bzw. das kalibrierte Kennlinienfeld hinterlegt, so dass bei der Umschalteinrichtung 7 in der ersten Position die Auswerteeinrichtung in der Lage ist, das mindestens eine Steuer- und/oder Regelsignal aufgrund des zuvor ermittelten Volumenstroms bzw. des kalibrierten Kennlinienfelds zu ermitteln.

Während des Betriebs des Bearbeitungsmaschine erfolgt die Steuerung und/oder Regelung also derart, dass ein vorgegebener Soll-Volumenstrom Qsoll vorgegeben ist und vorbe-stimmte Betriebsparameter der Bearbeitungsmaschine, wie z.B. der Pumpendruck p, Pumpeneinstellung d, Pumpendrehzahl n und/oder Kühl- und/oder Schmiermitteltemperatur T mittels Sensoren gemessen werden. Unter Zuhilfenahme des mit dem zuvor gemessenen Volumenstroms kalibrierten Kennfelds wird dann das zur Erreichung des gewünschten Soll-Volumenstroms Qsoll notwendige mindestens eine Steuer- und/oder Regelsignal ermittelt. Üblicherweise beeinflusst das mindestens eine Steuer- und/oder Regelsignal die Drehzahl n und/oder bei Nutzung einer verstellbaren Pumpe die Einstellung d.

Die Steuerung und/oder Regelung des Kühl- und/oder Schmiermittelvolumenstroms erfolgt also nicht in einem geschlossenen Regelkreis unter Zuhilfenahme einer laufenden Volumenstrommessung, sondern nutzt die zeitlich begrenzte, ggf. wiederkehrende Volumenstrommessung, um eine Kalibrierung auf den jeweiligen Betriebszustand der Pumpe oder des Kühl- und/oder Schmiermittelsystems zu ermöglichen.

## Patentansprüche

1. Schmier- und/oder Kühlmittelsystem zum Einsatz in einer Bearbeitungsmaschine mit einem Bearbeitungswerkzeug, wobei das Schmier- und/oder Kühlmittelsystem eine Pumpe (1) für ein Kühl- und/oder Schmiermittel und eine Vorrichtung zum Regeln und/oder Steuern des dem Bearbeitungswerkzeugs mittels einer Zuführleitung (4) zugeführten Kühl- und/oder Schmiermittelstroms aufweist und die Vorrichtung zum Regeln und/oder Steuern umfasst
einen vom Kühl- und/oder Schmiermittelstrom durchfließbaren Volumenstromsensor (8), der den Kühl- und/oder Schmiermittelvolumenstrom ermittelt, und
eine Auswerteeinrichtung zum Erzeugen mindestens eines Steuer- und/oder Regelsignals unter Berücksichtigung des ermittelten Kühl- und/oder Schmiermittelvolumenstroms zur Steuerung und/oder Regelung der Pumpenverstellung und/oder der Pumpendrehzahl,
**dadurch gekennzeichnet,**
**dass** eine Umschalteinrichtung (7) vorgesehen ist, mittels derer der Volumenstromsensor (8) mit der Pumpe (1) wahlweise in Fluidverbindung bringbar oder von dieser entkoppelbar ist.

2. Schmier- und/oder Kühlmittelsystem nach Anspruch 1, **dadurch gekennzeichnet, dass** mindestens ein weiterer Sensor zum Ermitteln mindestens eines Betriebsparameters vorgesehen ist und der Sensor ein Temperatursensor und/oder ein Pumpendrehzahlsensor und/oder ein Pumpendrucksensor ist.

3. Schmier- und/oder Kühlmittelsystem nach Anspruch 1 oder 2, **dadurch gekennzeichnet, dass** der Volumenstromsensor mittels einer Kombination aus mindestens einer Messblende und einer zugehörigen Druckmesseinrichtung gebildet ist.

4. Schmier- und/oder Kühlmittelsystem nach einem der Ansprüche 1 bis 3, **dadurch gekennzeichnet, dass** die Auswerteeinrichtung derart konfiguriert ist, dass der Kühl- und/oder Schmiermittelvolumenstrom Einfluss auf eine Kennfeldsteuerung bzw. -regelung nimmt.

5. Schmier- und/oder Kühlmittelsystem nach einem der vorhergehenden Ansprüche, **dadurch gekennzeichnet, dass** das Schmier- und/oder Kühlmittelsystem eine Messleitung (6) aufweist, welche mit der Zuführleitung (4) verbunden und von Kühl- und/oder Schmiermittel durchfließbar ist und der Volumenstromsensor (8) in der Messleitung (6) im Kühl- und/oder Schmiermittelstrom positioniert ist.

6. Schmier- und/oder Kühlmittelsystem nach Anspruch 5, **dadurch gekennzeichnet, dass** die Umschalteinrichtung (7) zwei Schaltstellungen aufweist, wobei in der ersten Schaltstellung Kühl- und/oder Schmiermittel weiter in der Zuführleitung (4) fließt und in der zweiten Schaltstellung Kühl- und/oder Schmiermittel in die Messleitung (6) fließt.

7. Schmier- und/oder Kühlmittelsystem nach einem der vorhergehenden Ansprüche, **dadurch gekennzeichnet, dass** die Umschalteinrichtung (7) ein Wegeventil mit zwei Schaltstellungen ist und/oder proportional verstellt werden kann.

8. Schmier- und/oder Kühlmittelsystem nach einem der Ansprüche 6 oder 7, **dadurch gekennzeichnet, dass** die Auswerteeinrichtung in der ersten Schaltstellung der Umschalteinrichtung (7) das mindestens eine Steuer- und/oder Regelsignal unter Einbeziehung des in der zweiten Schaltstellung der Umschalteinrichtung (7) ermittelten Kühl- und/oder Schmiermittelvolumenstroms erzeugt.

9. Schmier- und/oder Kühlmittelsystem nach einem der Ansprüche 6 bis 8, **dadurch gekennzeichnet, dass** die Umschalteinrichtung (7) zumindest vorübergehend während einer Inbetriebnahmephase der Bearbeitungsmaschine in der zweiten Schaltstellung steht.

10. Schmier- und/oder Kühlmittelsystem nach einem der vorhergehenden Ansprüche, **dadurch gekennzeichnet, dass** die Messleitung (6) in einen Kühl- und/oder Schmiermitteltank (11) mündet.

11. Schmier- und/oder Kühlmittelsystem nach einem der Ansprüche 1 bis 9, **dadurch gekennzeichnet, dass** die Messleitung (6) stromabwärts des Volumenstromsensors (8) in die Zuführleitung (4) mündet.

12. Regelungs- und/oder Steuerungseinrichtung zum Regeln und/oder Steuern des Kühl-und/oder Schmiermittelstroms, der einem Bearbeitungswerkzeug einer Bearbeitungsmaschine mittels einer Pumpe (1) zugeführt ist,
mit einer Auswerteeinrichtung zum Erzeugen mindestens eines Steuer- und/oder Regelsignals unter Berücksichtigung eines ermittelten Kühl- und/oder Schmiermittelvolumenstroms,
**dadurch gekennzeichnet,**
**dass** die Auswerteeinrichtung derart ausgestaltet ist, dass diese zum Erzeugen des Steuer-und/oder Regelsignals für die Pumpenverstellung und/oder der Pumpendrehzahl das Steu-er- und/oder Regelsignal basierend auf dem zuvor während mindestens einer ausgewählten Zeitspanne zu Kalibrierzwecken ermittelten Kühl- und/oder Schmiermittelvolumenstrom mittels eines hinterlegten Kennfelds berechnet.

13. Regelungs- und/oder Steuerungseinrichtung nach Anspruch 12, die in einer Regelungs-und/oder Steuerungseinheit einer Pumpe, eines Pumpenmotors oder einer Bearbeitungsmaschine integriert ist.

14. Bearbeitungsmaschine mit einem Schmier- und/oder Kühlmittelsystem nach einem der Ansprüche 1 bis 11 und/oder einer Regelungs- und/oder Steuerungseinrichtung nach einem der Ansprüche 12 oder 13.

15. Verfahren zum Regeln und/oder Steuern des Kühl- und/oder Schmiermittelstroms der einem Bearbeitungswerkzeug einer Bearbeitungsmaschine mittels einer Pumpe (1) zugeführt ist, mit den folgenden Schritten:
Ermitteln eines von der Pumpe erzeugten Kühl- und/oder Schmiermittelvolumenstroms,
Erzeugen mindestens eines Steuer- und/oder Regelsignals mittels einer Auswerteeinrichtung unter Berücksichtigung des ermittelten Kühl- und/oder Schmiermittelvolumenstroms zur Steuerung und/oder Regelung der Pumpenverstellung und/oder Pumpendrehzahl,
**dadurch gekennzeichnet,**
**dass** der Kühl- und/oder Schmiermittelvolumenstrom nur während ausgewählter Zeitspannen zu Kalibrierzwecken ermittelt wird und hauptsächlich während der übrigen Betriebszeiten der Kühl- und/oder Schmiermittelvolumenstrom nicht ermittelt wird, wobei die Auswerteeinrichtung das Steuer- und/oder Regelsignal basierend auf dem zuvor ermittelten Kühl-und/oder Schmiermittelvolumenstrom mittels hinterlegter und/oder ermittelter Daten zur Steuerung und/oder Regelung der Pumpenverstellung und/oder Pumpendrehzahl berechnet.

16. Verfahren nach Anspruch 15, **dadurch gekennzeichnet, dass** während Betriebszeiten, in denen der Kühl- und/oder Schmiermittelvolumenstrom nicht ermittelt wird die Auswerteeinrichtung das Steuer- und/oder Regelsignal mittels eines Kennfeldes berechnet, welches mittels eines zuvor ermittelten Kühl- und/oder Schmiermittelvolumenstroms zumindest teilweise erstellt und/oder teilweise kalibriert wurde.
